# EUROPÄISCHE PATENTANMELDUNG

(11) **EP 0 873 963 A1**
(43) Veröffentlichungstag der Anmeldung: **28.10.1998**
(21) Anmeldenummer: 98107025.3
(22) Anmeldetag: 17.04.1998
(51) Int. Cl.: B66B 11/04, B66B 13/08, H01L 41/09

(54) **Linearantrieb für eine Transporteinrichtung**

(30) Priorität: 25.04.1997 EP 97810261
(71) Anmelder: INVENTIO AG, CH-6052 Hergiswil (CH)
(72) Erfinder: Weinberger, Karl, E1.-Ing.TH, 6330 Cham (CH); Silberhorn, Gert, Dipl.-Ing. FH, 6403 Küssnacht (CH); Rennetaud, Jean Marie, Dipl.-Ing., 6036 Dierikon (CH)

(57) **Zusammenfassung**

Bei dieser Antriebseinrichtung ist eine entlang einer Fahrbahn (1) verfahrbare Fahrkabine (2) am oberen Kabinenende mit Führungen (3) entlang von Führungsschienen (4) geführt. Am unteren Kabinenende ist ein Linearantrieb angeordnet. Eine in fester Verbindung mit der Fahrkabine (2) stehende erste Plattform (5) ist mittels Zugfedern (6) mit einer beweglichen zweiten Plattform (7) verbunden. An der ersten Plattform (5) sind eine erste und eine zweite Halteeinheit (8, 9) angeordnet. An der zweiten Plattform (7) sind eine dritte und eine vierte Halteeinheit (10, 11) angeordnet. Eine erste und zweite Vorschubeinheit (12, 13) verbinden die erste fest angeordnete Plattform (5) mit der beweglichen zweiten Plattform (7). Bei einer Aufwärtsfahrt halten sich die dritte und vierte Halteeinheit (10, 11) an der Führungsschiene (4) fest. Gleichzeitig schieben die Vorschubeinheiten (12, 13) die Fahrkabine (2) ein kleines Stück hoch. Dann hält sich die erste und zweite Halteeinrichtung (8, 9) an der Führungsschiene (4) fest und die zweite Plattform (7) mit der dritten und vierten Halteeinrichtung (10, 11) wird nachgezogen, worauf der Zyklus von vorne beginnt.

## Beschreibung

Die Erfindung betrifft einen Linearantrieb für eine entlang einer Fahrbahn verfahrbaren Transporteinrichtung insbesondere für den Aufzugsbau.

Aufzugskabinen, Gegengewichte und Türen von Aufzugsanlagen werden üblicherweise mittels Rotationsmotoren angetrieben, wobei über eine motorisch angetriebene Treibscheibe geführte Seile Aufzugskabine und Gegengewicht verbinden. Bei Türen treibt ein über eine Motorriemenscheibe geführter Riemen Türflügel an. Auch sind Linearantriebe für Türen bekannt. Bei Linearantrieben oder Reibradantrieben ist der Motor an der Aufzugskabine oder am Gegengewicht angeordnet, wobei über eine Umlenkrolle geführte Seile Aufzugskabine und Gegengewicht verbinden. Bei seillosen Aufzügen ist die auf dem Reibradprinzip oder Linearmagnetprinzip funktionierende Antriebseinheit an der Aufzugskabine angeordnet. Allen Antriebsarten gemeinsam ist eine vom Antrieb unabhängige Sicherheitseinrichtung für den Fall, dass der Antrieb versagt und die Aufzugskabine abstürzt. Die Sicherheitseinrichtung hat die Aufgabe, die Aufzugskabine ab einer bestimmten Übergeschwindigkeit zu fangen und stillzusetzen.

Ein Nachteil der bekannten Einrichtung liegt darin, dass für die Antriebseinheit und für die Sicherheitseinrichtung ein grosser mechanischer Aufwand mit vielen Einzelteilen notwendig ist. Als Folge davon entstehen hohe Kosten für die Herstellung und den Unterhalt sowie mehr störungsbedingte Betriebsunterbrüche.

Hier will die Erfindung Abhilfe schaffen. Die Erfindung, wie sie in Anspruch 1 gekennzeichnet ist, löst die Aufgabe, die Nachteile der bekannten Einrichtung zu vermeiden und eine Einrichtung zu schaffen, die als Antriebs-, Brems- und/oder Sicherheitseinrichtung dient.

Die durch die Erfindung erreichten Vorteile sind im wesentlichen darin zu sehen, dass eine Antriebseinheit einschliesslich der Brems- und Sicherheitseinrichtung mit einfachen und nur mit wenigen bewegten mechanischen Teilen machbar ist. Ausserdem werden gegenüber herkömmlichen Antrieben Energieeinsparungen möglich. Weiter vorteilhaft ist, dass die von den Magnetmotoren erzeugten elektromagnetischen Felder nicht auftreten und dass die Reaktionszeit der Brems- und Sicherheitseinrichtung wesentlich verkürzt werden kann.

Im folgenden wird die Erfindung anhand von lediglich einen Ausführungsweg darstellenden Zeichnungen näher erläutert. Es zeigen:
- Fig. 1: eine Fahrkabine mit einem erfindungsgemässen Linearantrieb,
- Fig. 2: eine Halteeinheit des erfindungsgemässen Linearantriebs,
- Fig. 3: Einzelheiten der Halteeinheit,
- Fig. 4: eine weitere Ausführungsvariante der Halteeinheit,
- Fig. 5: Einzelheiten der Ausführungsvariante gemäss Fig. 4,
- Fig. 6.1 bis Fig. 6.6: die Funktionsweise des Linearantriebs in Aufwärtsrichtung und
- Fig. 7.1 bis Fig. 7.6: die Funktionsweise des Linearantriebs in Abwärtsrichtung.

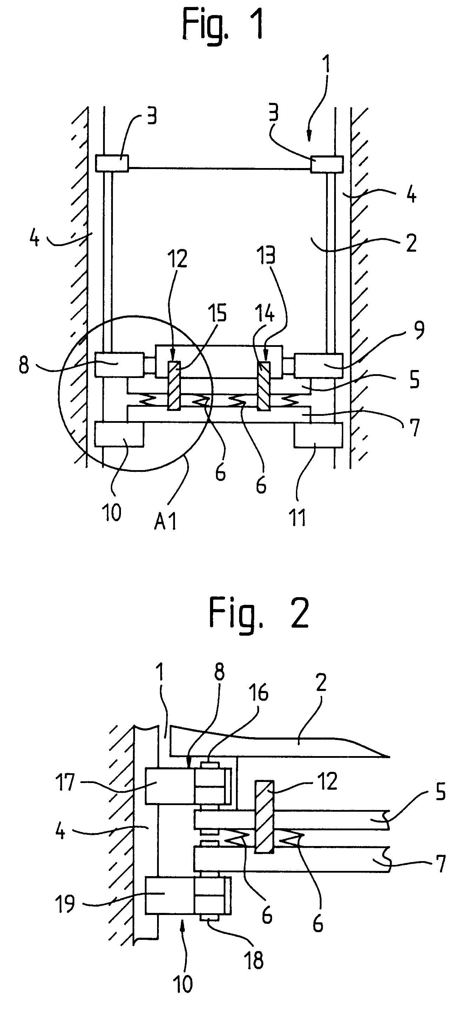

In den Fig. 1 bis 7 ist mit 1 eine Fahrbahn bezeichnet, entlang der beispielsweise mindestens eine als Transporteinrichtung für Personen oder Gegenstände dienende Fahrkabine 2 verfahrbar ist. Am oberen Kabinenende sind Führungen 3 angeordnet, die die Fahrkabine 2 entlang von Führungsschienen 4 führen. Am unteren Kabinenende ist der erfindungsgemässe Linearantrieb angeordnet. Die Führungen 3 können auch unten und der Linearantrieb auch oben angeordnet sein. Führungen 3 und Linearantriebe können auch oben und unten angeordnet sein. Eine in fester Verbindung mit der Fahrkabine 2 stehende erste Plattform 5 ist mittels Zugfedern 6 mit einer beweglichen zweiten Plattform 7 verbunden. An der ersten Plattform 5 sind eine erste Halteeinheit 8 und eine Zweite Halteeinheit 9 angeordnet. An der zweiten Plattform 7 sind eine dritte Halteeinheit 10 und eine vierte Halteeinheit 11 angeordnet. Die Halteeinheiten 8, 9, 10, 11 reichen bis zur Führungsschiene 4. Einzelheiten der Halteeinheiten 8, 9, 10, 11 des Ausschnittes A1 sind in den Figuren 2 bis 5 dargestellt.

Das Ausführungsbeispiel zeigt eine vertikale Fahrbahn 1, auch Fahrschacht oder Aufzugsschacht genannt, entlang der die Fahrkabine 2, auch Aufzugskabine genannt, verfahrbar ist. Die Fahrbahn 1 kann auch horizontal oder schräg verlaufen.

Bei Türantrieben für Aufzüge besteht die Transporteinrichtung aus einer entlang einer Fahrbahn verfahrbaren Mechanik, beispielsweise einem Schlitten für den Transport der Fahrkabinentüren und Haltestellentüren, wobei die Mechanik mit dem erfindungsgemässen Linearantrieb angetrieben und gebremst wird.

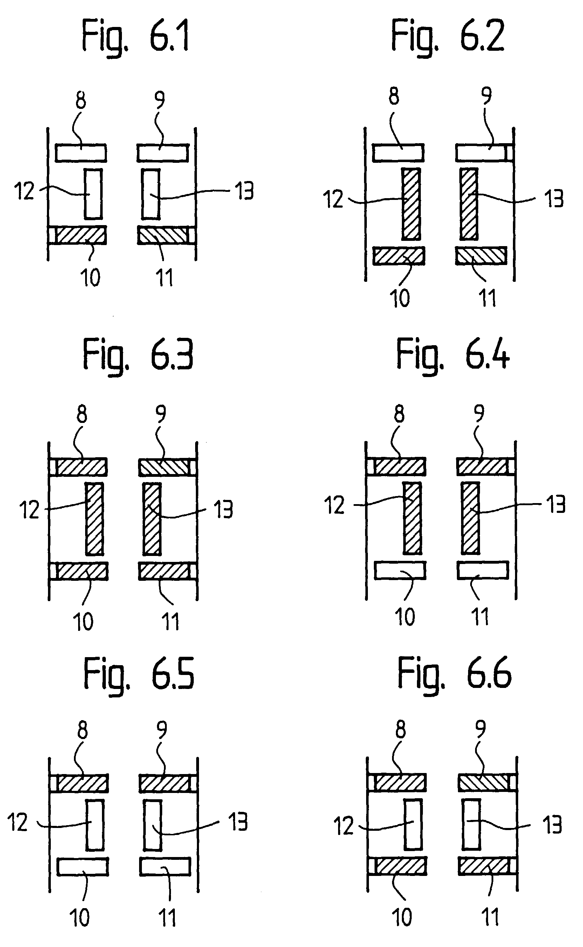

Eine erste und zweite Vorschubeinheit 12, 13 sind einenends mit der ersten fest angeordneten Plattform 5 und anderenends mit der beweglichen zweiten Plattform 7 verbunden. Die vom Gewicht der zweiten Plattform 7, der dritten Halteeinrichtung 10 und vierten Halteeinrichtung 11 erzeugte Kraft wird mittels der Zugfedern 6 kompensiert, wodurch die Vorschubeinheiten 12, 13 zugspannungsfrei bleiben. In Fig. 1 sind zwei Vorschubeinheiten 12, 13 dargestellt, es können auch nur eine oder mehr als zwei Vorschubeinheiten vorgesehen sein. Die erste Vorschubeinheit 12 und die zweite Vorschubeinheit 13 weist je mindestens einen piezoelektrischen Aktuator 14, 15 auf. Ein piezoelektrischer Aktuator 14, 15 besteht aus einem Stapel von zum Beispiel mehreren Dutzend zwischen jeweils zwei Elektroden angeordneten piezoelektrischen Elementen wie Kristalle oder Schichten aus Keramik oder Polyvinylidenflourid. Beim Anlegen einer Gleichspannung an die Elektroden erfahren die piezoelektrischen Elemente eine Deformation in der Länge. Die Längenausdehnung wird für den Vorschub der Fahrkabine 2 oder der Türen ausgenützt. Die Funktionsweise der Antriebseinrichtung ist in den Figuren 6.1 bis 7.6 näher erläutert. Beispielsweise können fünf Parallel arbeitende Säulen mit je sieben in Reihe geschalteten Aktuatoren für den Vorschub der Fahrkabine 2 verwendet werden. Eine solche Vorschubeinheit erzeugt gegenüber einer Vorschubeinheit mit einem Aktuator eine fünffache Vorschubkraft und eine siebenfache Längenausdehnung der Aktuatoren bzw. Geschwindigkeit der Fahrkabine 2 bei gleicher Schaltfrequenz.

Bei Antrieben für grosse Kräfte, wie sie beispielsweise für die Fahrkabine notwendig sind, werden die piezoelektrischen Aktuatoren unterhalb ihrer eigenen Resonanzfrequenz, beispielsweise bei 500 Hz betrieben.

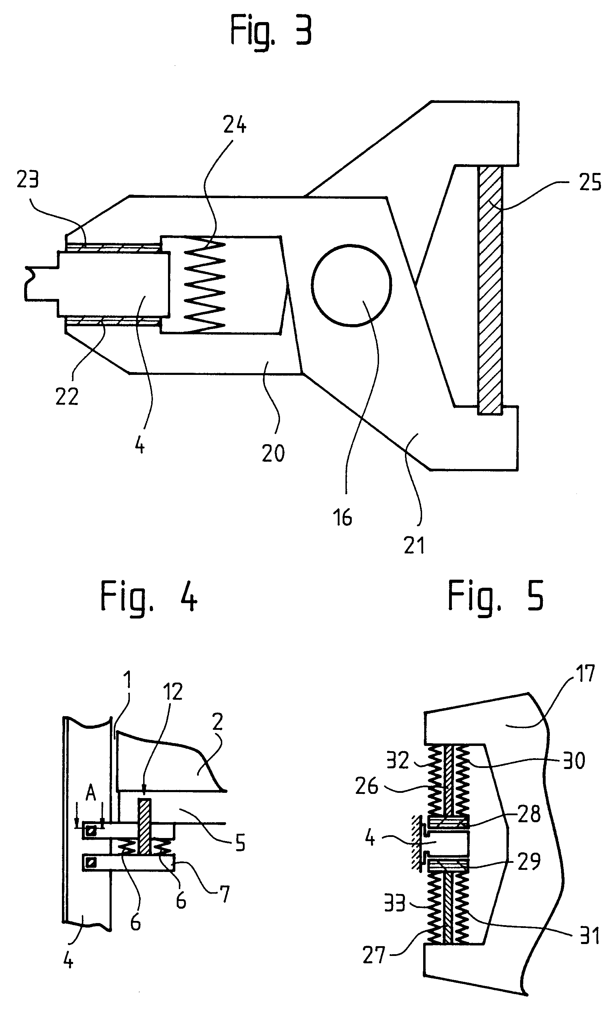

Die Figuren 2 und 3 zeigen den Aufbau der ersten und dritten Halteeinheit 8, 10. Die zweite und vierte Halteeinheit 9, 11 sind im Aufbau und in der Funktion identisch. Die erste Halteeinheit 8 besteht aus einer an der ersten Plattform 5 angeordneten ersten Achse 16, an der eine erste Bremszange 17 drehbar gelagert ist. Die dritte Halteeinheit 10 besteht aus einer an der zweiten Plattform 7 angeordneten dritten Achse 18, an der eine dritte Bremszange 19 drehbar gelagert ist. Der übrige Aufbau und die Funktion der dritten Halteeinheit 10 ist identisch mit der ersten Halteeinheit 8. Ein um die erste Achse 16 drehbarer erster Arm 20 und ein um die erste Achse 16 drehbarer zweiter Arm 21 der ersten Bremszange 17 weisen an einem Ende einen ersten Bremsbelag 22 bzw. einen zweiten Bremsbelag 23 auf, die im Bremsfall an der Führungsschiene 4 angreifen und eine Bremskraft erzeugen. Führungsschienenseitig sind die Arme 20, 21 mittels einer zweiten Zugfeder 24 verbunden, die die Bremsbeläge 22, 23 ohne Fremdeinwirkung an die Führungsschiene 4 presst und eine auf dem Reibungsprinzip funktionierende Verbindung zwischen der Führungsschiene 4 und der ersten Plattform 5 herstellt. Die anderen Enden der Arme 20, 21 sind mittels eines dritten piezoelektrischen Aktuators 25 verbunden. Beim Beaufschlagen des piezoelektrischen Aktuators 25 mit einer Gleichspannung dehnt sich dieser aus. Die dabei auf die Armenenden erzeugte Kraft wirkt der Zugkraft der Zugfeder 24 entgegen, löst die Bremsbeläge 22, 23 von der Führungsschiene 4 und somit die Verbindung zwischen der Führungsschiene 4 und der ersten Plattform 5. Beispielsweise können sechs Aktuatoren parallel geschaltet werden. Eine solche Halteeinheit erzeugt gegenüber einer Halteeinheit mit einem Aktuator eine sechsfache Kraft.

Fig. 4 zeigt eine weitere Ausführungsvariante einer Halteeinheit 8, 9, 10, 11 und Fig. 5 zeigt einen Schnitt entlang der Linie A-A der Fig. 4. Die Halteeinheit weist einen vierten Aktuator 26 und fünften Aktuator 27 auf, die bei Beaufschlagung mit einer Gleichspannung einen dritten Bremsbelag 28 bzw. einen vierten Bremsbelag 29 gegen die Führungsschiene 4 pressen und eine Bremskraft auf der Führungsschiene 4 erzeugen. Eine dritte, vierte, fünfte und sechste Zugfeder 30, 31, 32, 33 halten den vierten Aktuator 26 bzw. den fünften Aktuator 27 in ihrer Lage.

Die Halteeinheiten 8, 9, 10, 11 dienen nicht nur dem Antrieb der Fahrkabine 2 sondern auch als Brems- und/oder als Sicherheitseinrichtung. Bei Normalbetrieb dienen die Halteeinheiten 8, 9, 10, 11 bei einem Haltestellenhalt auch als Haltebremse zum Vermeiden von Absinkbewegungen beim Beladen der Fahrkabine 2. In Notfällen, beispielsweise bei Übergeschwindigkeit der Fahrkabine 2 werden die Halteeinheiten 8, 9, 10, 11 als Bremsen bzw. als Fangvorrichtungen verwendet. Die Brems- und Sicherheitseinrichtung weist eine Redundanz von zwei auf, weil zwei Halteeinheiten 8, 9 zum Vermeiden von Übergeschwindigkeiten und zum Stillsetzen der Fahrkabine 2 notwendig sind und die übrigen beiden parallel zu den ersten beiden Halteeinrichtungen 8, 9 arbeitenden Halteeinheiten 10, 11 als Sicherheitseinheiten dienen.

Nicht dargestellte Sensoren und Sicherheitskreise überwachen die Vorschubeinheiten 12, 13 und die Halteeinheiten 8, 9, 10, 11. Beispielsweise werden bei den Vorschubeinheiten 12, 13 die Längenausdehnung und bei den Halteeinheiten 8, 9, 10, 11 der Druck auf die Führungsschiene 4 gemessen. Die Sensorsignale werden mittels Sicherheitskreise überwacht und verarbeitet. Ein der in den Fig. 6.1 bis Fig. 7.6 gezeigten Arbeitsschritte wird erst ausgeführt, wenn der vorhergehende Arbeitsschritt ausgeführt und kontrolliert ist. Beispielsweise wird der in Fig. 6.2 gezeigte Schritt erst ausgeführt, nachdem im vorhergehenden Schritt der Anpressdruck der Bremsbeläge 22, 23, 28, 29 auf die Führungsschiene 4 mittels Drucksensoren gemessen und vom Sicherheitskreis ausgewertet worden ist.

Fig. 6.1 bis Fig. 6.6 zeigen die Arbeitsweise der Antriebseinrichtung in Aufwärtsrichtung. Wie in Fig. 6.1 gezeigt, halten die dritte Halteeinheit 10 und die vierte Halteeinheit 11 die Fahrkabine 2. Fig. 6.2 zeigt den Vorschub der Fahrkabine 2, bei dem die Aktuatoren 14, 15 der Vorschubeinheiten 12, 13 aktiviert werden. Durch die Längenausdehnung der piezoelektrischen Aktuatoren 14, 15 wird die Fahrkabine 2 nach oben geschoben. Dann wird gemäss Fig. 6.3 die Fahrkabine 2 auch von der ersten Halteeinheit 8 und von der zweiten Halteeinheit 9 gehalten. In Fig. 6.4 wird die Reibungsverbindung zwischen der dritten bzw. vierten Halteeinheit 10, 11 und der Führungsschiene 4 gelöst. Danach werden wie in Fig. 6.5 gezeigt, die Vorschubeinheiten 12, 13 deaktiviert. Dabei wird die Zweite Plattform 7 hochgezogen. Fig. 6.6 zeigt alle Halteeinrichtungen 8, 9, 10, 11 in Reibverbindung mit der Führungsschiene 2.

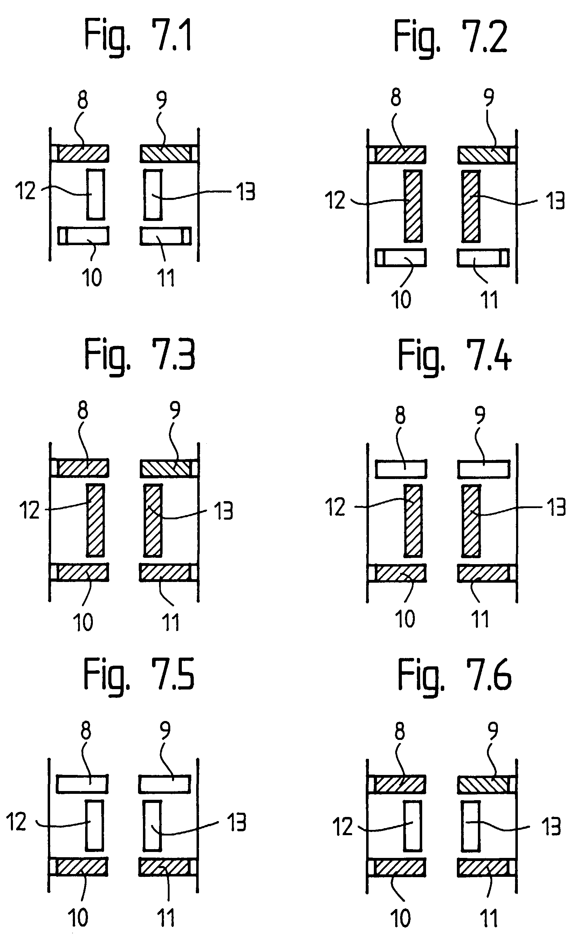

Fig. 7.1 bis Fig. 7.6 zeigen die Arbeitsweise der Antriebseinrichtung in Abwärtsrichtung. Die Antriebseinrichtung arbeitet in Abwärtsrichtung analog zur Aufwärtsrichtung.

## Patentansprüche

1. Linearantrieb für eine entlang einer Fahrbahn verfahrbare Transporteinrichtung insbesondere für den Aufzugsbau,
dadurch gekennzeichnet,
dass der Linearantrieb piezoelektrische Aktuatoren (14, 15, 16, 26, 27) aufweist.

2. Linearantrieb nach Anspruch 1,
dadurch gekennzeichnet,
dass der Linearantrieb für eine als Transporteinrichtung für Personen oder Gegenstände dienende Fahrkabine (2) vorgesehen ist.

3. Linearantrieb nach Anspruch 1,
dadurch gekennzeichnet,
dass der Linearantrieb für eine als Transporteinrichtung für an der Fahrkabine (2) und/oder an der Fahrbahn (1) bzw. an den Haltestellen angeordnete Türen dienende Mechanik vorgesehen ist.

4. Linearantrieb nach den Ansprüchen 1 bis 3,
dadurch gekennzeichnet,
dass zur Kraftverstärkung eine Parallelschaltung der piezoelektrischen Aktuatoren (14, 15, 16, 26, 27) vorgesehen ist.

5. Linearantrieb nach den Ansprüchen 1 bis 4,
dadurch gekennzeichnet,
dass zur Erhöhung der die Geschwindigkeit der Fahrkabine (2) oder der Türen mitbestimmende Längenausdehnung der piezoelektrischen Aktuatoren (14, 15, 16, 26, 27) eine Reihenschaltung der piezoelektrischen Aktuatoren (14, 15, 16, 26, 27) vorgesehen ist.

6. Linearantrieb nach den vorhergehenden Ansprüchen,
dadurch gekennzeichnet,
dass mit piezoelektrischen Aktuatoren (14, 15) versehene Vorschubeinheiten (12, 13) und mit piezoelektrischen Aktuatoren (16, 26, 27) versehene Halteeinheiten (8, 9, 10, 11) vorgesehen sind.

7. Linearantrieb nach Anspruch 6,
dadurch gekennzeichnet,
dass eine Halteeinheit (8, 9, 10, 11) eine mit um eine Achse (16) drehbaren Armen (20, 21) versehene Bremszange (17) aufweist, wobei ein dritter piezoelektrischer Aktuator (25) die Bremszange (17) löst und eine zweite Zugfeder (24) die Bremszange (17) schliesst.

8. Linearantrieb nach Anspruch 6,
dadurch gekennzeichnet,
dass eine Halteeinheit (8, 9, 10, 11) einen vierten piezoelektrischen Aktuator (26) und einen fünften piezoelektrischen Aktuator(27) aufweist, die eine Bremskraft auf eine Führungsschiene (4) der Fahrkabine (2) erzeugen.

9. Linearantrieb nach den Ansprüchen 6 bis 8,
dadurch gekennzeichnet,
dass die Halteeinheiten (8, 9, 10, 11) als Brems- und/oder als Sicherheitseinrichtung zum Bremsen und Halten bzw. Vermeiden von Übergeschwindigkeit und zum Stillsetzen der Fahrkabine (2) vorgesehen sind.

10. Linearantrieb nach den vorhergehenden Ansprüchen,
dadurch gekennzeichnet,
dass die piezoelektrischen Aktuatoren (14, 15, 16, 26, 27) unterhalb ihrer Resonanzfrequenz betrieben werden.
